# EUROPEAN PATENT APPLICATION

(11) **EP 0 956 778 A1**
(43) Date of publication of application: **17.11.1999**
(21) Application number: 99111196.4
(22) Date of filing: 18.03.1994
(51) Int. Cl.: A23J 3/08, A23L 1/314, A23L 1/318

(54) **Method of preparing a meat product using a transglutaminase containing milk product**

(30) Priority: 19.03.1993 DK 31293
(62) Divisional of application: 94910359.2
(71) Applicant: NOVO NORDISK A/S, 2880 Bagsvaerd (DK)
(72) Inventor: Budolfsen, Gitte, 2000 Frederiksberg (DK); Nielsen, Per Munk, 3400 Hillerod (DK)
(74) Representative: Pedersen, Karen Oestergaard

(57) **Abstract**

The method for production of an acidified edible gel on milk basis comprises addition of transglutaminase to milk, followed by a heat treatment. Hereby a functionally and/or organoleptically satisfactory edible gel is obtained, which can be used as a yoghurt mousse or cheese.

## Description

Many efforts have been exercised in order to generate derived milk products of nutritional value and with improved functional and/or organoleptic properties, including acidified, edible gels on milk basis. A typical example of such products is desserts, especially yoghurt and curd. In order to prepare such desserts of satisfactory quality it is necessary either to add both emulsifying agents and stabilizing agents in rather large amounts or to conduct the production process as a slow fermentation.

It is the purpose of the invention to provide a method for production of an acidified edible gel on milk basis, which exhibits satisfactory functional and/or organoleptic properties differing from the prior art acidified edible gels on milk basis like yoghurt and curd, and in relation to which it is not necessary to add any emulsifying or stabilizing agents and in relation to which it is possible to conduct the production process as a rapid pH reduction, and a use of such gel.

The method according to the invention for production of an acidified edible gel on milk basis is characterized by the fact that in a first step transglutaminase is added to milk or a milk like product, that in a second step the pH of the transglutaminase containing milk or milk like product is adjusted to 4.8 to 5.8, and that in a third step the pH-adjusted, transglutaminase containing milk or milk like product is exposed to a heat treatment.

In this specification with claims the term "milk or a milk like product" is to be understood as whole milk, skim milk, cream or a milk product with a fat content from 0% to 50% originating from any animal, preferably a cow, as such or slightly modified, e.g. by addition of flavorants. Also, it is to be understood that the milk or milk like product can be produced by suspending skim milk powder and/or full fat milk powder in an aqueous medium. Furthermore it is to be understood that the protein content of the milk or milk like product, and thus also the protein content of the acidified edible gel, is of the order of magnitude 2.0 to 6.0% w/w.

Also, it goes without saying that the concentration of Ca⁺⁺ is supposed to be of such value that Ca⁺⁺ is able to activate the transglutaminase.

Transglutaminase can be added in a dosage measured in g of pure transglutaminase per g of the protein content of the milk product, or in a dosage based on the transglutaminase activity unit, indicated in P.D. Bishop et al., Biochemistry, 29, 1990, PP. 1861-1869.

Surprisingly it has been found that the gel which has a low protein content has a pleasant consistency and mouth feeling and exhibits satisfactory organoleptic properties. These organoleptic properties can be improved by addition of flavorants to the milk or milk like product. Also, it is surprising that no emulsifying or stabilizing agents need to be added in relation to the method according to the invention. The reason for this is not completely understood, but it may be assumed as a hypothesis that the transglutaminase crosslinks the proteins in the milk or milk like product, whereby a lattice or network is generated, which do not need either emulsifying or stabilizing agents due to its own inherent stability. Furthermore, it suprisingly has been found that the production of the acidified edible gel according to the invention can be carried out with a rapid pH reduction.

From Japanese unexamined patent application No. JP-A-3-160957 a gel on the basis of a transglutaminase modified milk protein is described. However, in the prior art no pH reduction is described, and also, the protein content of the milk or milk like product used as a starting material is around 10%, i.e. much higher than in relation to this invention.

In a preferred embodiment of the method according to the invention the transglutaminase is used in an amount of between 0.1 and 0.5% w/w, related to the amount of milk protein. In this manner an edible gel with satisfactory organoleptic characteristics can be obtained.

In a preferred embodiment of the method according to the invention the transglutaminase is of human, of bovine or of microbial origin. In this manner a transglutaminase with a satisfactory activity can be obtained.

In a preferred embodiment of the method according to the invention a heat treatment is carried out between the first and the second step, preferably at a temperature between 60 - 100°C, and in a time range between 0.5 and 10 minutes. In this manner an edible gel with improved organoleptic characteristics can be obtained.

In a preferred embodiment of the method according to the invention the milk or milk like product is whole milk, to which a flavorant has been added, preferably orange juice. In this manner an edible gel with improved organoleptic characteristics can be obtained.

In a preferred embodiment of the method according to the invention the heat treatment is carried out at a temperature between 60 and 140°C and a time range between 0.5 and 20 minutes, preferably at a temperature between 70 and 100°C and at a time range between 0.5 and 10 minutes. These intervals for temperature and time are optimal for the gelation of the transglutaminase treated milk or milk like product.

Also, the invention comprises a use of the acidified edible gel on milk basis producible by means of the method according to the invention, as a yoghurt mousse, a cheese, or as a pickling liquid for meat. In regard to the use as a pickling liquid for meat it is to be noted 1) that the transglutaminase containing milk or milk like product immediately before the heat treatment is injected into the meat or mixed intimately with the meat, and that the heat treatment is performed after the injection or the intimate mixing, and 2) that any kind of meat can be used in relation to this use, e.g. ham or fish meat. In relation to the use of the gel as a pickling liquid for meat it is to be noted that a gel cannot be injected into the meat; thus, in this case the third step of the method for production of the gel will only be performed after the injection of the pH-adjusted, transglutaminase containing milk or milk like product into the meat.

The method according to the invention will be illustrated in the following example.

### EXAMPLE 1

To 100 g milk (pH 6.68) is added 0.014 g of active human transglutaminase. 9.2 g of black currant juice and 11 g of orange juice is added, whereby pH of the total mixture changes to 5.20.

100 ml of the total mixture is subsequently treated in a microwave oven for 50 seconds with an effect of 520 watt, whereby an organoleptically acceptable gel is formed.

If a similar experiment without addition of transglutaminase is performed, the end product remains liquid.

### EXAMPLE 2

To 100 g portions of reconstituted skim milk made with either 9%, 15% or 30% skim milk powder is added 0.014 g, 0.023 g and 0.047 g of active human transglutaminase (FXIIIa).

The portions are then incubated at 37°C for 45 minutes.

The portions are then acidified to pH 5.0 with HCl, Citric Acid and Glucone- delta- Lactone, respectively. The portions are then heated in a microwave oven for 50 seconds with an effect of 520 watt, whereby organoleptically acceptable gels are formed.

If a similar experiment without addition of transglutaminase is performed no gel is formed.

## Claims

1. A method of preparing a meat product, which method comprises the steps of
i) injecting into meat, or mixing intimately with meat, a transglutaminase-containing milk or milk-like product; and afterwards
ii) subjecting the meat to a heat treatment.

2. The method of claim 1 wherein said transglutaminase-containing milk or milk-like product has been prepared by a process, in which a first step is an addition of transglutaminase, and a second step an adjustment of pH to 4.8-5.8.

3. A method of preparing a meat product, which method comprises the below steps in the sequence indicated:
i) adding transglutaminase to milk or a milk like product;
ii) injecting into meat, or mixing intimately with meat, transglutaminase-containing milk or milk-like product; and
iii) subjecting the meat to a heat treatment.

4. The method of claim 3 which further comprises the step of
iv) adjusting the pH of the transglutaminase containing milk or milk like product to 4.8 to 5.8, wherein step iv) follows step i) and precedes step ii).

5. The method according to any one of claims 1-4, characterized by the fact that the transglutaminase is used in an amount of between 0.1 and 0.5% w/w, related to the amount of milk protein.

6. The method according to any one of claims 1-5, characterized by the fact that the transglutaminase is of human, of bovine or of microbial origin.

7. The method according to any one of claims 1-6, characterized by the fact that the milk or milk like product is whole milk.

8. The method according to any one of claims 1-7, characterized by the fact that the heat treatment is carried out at a temperature between 60 and 140°C and a time range between 0.5 and 20 minutes, preferably at a temperature between 70 and 100°C and at a time range between 0.5 and 10 minutes.

9. The method according to any one of claims 1-8, characterized by the fact that the meat is selected from amongst ham and fish meat.

10. A meat product obtainable by the method according to any one of claims 1-9.
